# EUROPEAN PATENT APPLICATION

(11) **EP 2 879 083 A1**
(43) Date of publication of application: **03.06.2015**
(21) Application number: 13195294.7
(22) Date of filing: 02.12.2013
(51) Int. Cl.: G06Q 10/06

(54) **Asynchronous generation of a production request for the production of a product according to a customer request**

(71) Applicant: Siemens Aktiengesellschaft, 80333 München (DE)
(72) Inventor: Raviola, Alessandro, 16156 Genova (IT); Reggio, Elena, 16133 Genova (IT)
(74) Representative: Maier, Daniel Oliver

(57) **Abstract**

The present invention discloses a method for the production of a product, said production being controlled and executed by a Manufacturing Execution System working according to the ISA-S95 standard, comprising the steps of:
a) providing a product production rule for the production of the product wherein said product production rule comprises a plurality of product segments thereby defining all the resources, such as materials, equipment, personnel, required during a workflow of production steps of said production;
b) receiving a customer request for the production of the product and creating a production request for the execution of the production according to said customer request wherein for the creation of the production request the production request is instantiated by copying a workflow of abstracted resources representing the workflow of production steps satisfying the customer request from the relevant product production rule into the production request;
c) executing the production by applying the production request and asynchronously to the creation of the production request adding the resource which replaces the abstracted resource related to the first production step from the production production rule to the production request thereby only copying the actually used resouce into the production request and executing the respective production step on that resource;
d) executing the production of the product by repeating step c) stepwise until all abstracted resources have been replaced in the workflow of abstracted resources related to the workflow of production steps by the actually used resource in that production step.

## Description

The present invention relates to a method for the production of a product, said production being controlled and managed by a Manufacturing Execution System working according to the ISA-S95 standard.

In the world of process automation and process monitoring standard automation systems for controlling the widest conceivable variety of machines and plants are state of the art. The relevant standard for these so-called Manufacturing Execution System (MES) is the ISA-S95. Such technology covers in particular a broad range of products which are offered by the Siemens Corp. under its SIMATIC® product family within the field of the manufacturing execution systems. The Standard ISA-S95 translates into standardized terminology, concepts and models for integrating manufacturing operations functions with enterprise functions. Such standardization is achieved with ISA-S95, which defines the functional view of an enterprise, allowing a simple generic model of work activities to be applied to the main areas of manufacturing.

An extensive line of products for solving the technical tasks in question such as counting, measuring, positioning, motion control, closed-loop control and cam control enhance the performance capabilities of appropriate process controllers. A variety of configurations enable the implementation of flexible machine concepts.

In this context a broad range of IT solutions exist to connect the actual hardware close to the technical and/or logistical process to the application layer of the client driving the installation. Manufacturing execution systems have therefore been developed to meet all of the requirements of a service oriented architecture (SOA) to integrate seamless into a totally integrated automation (TIA). A plug & play architecture, in which the individual functions can be easily combined and configured with each other thereby forms the basis for this success thereby simplifying the complex structures of controlling a manufacturing plant or the like.

These demands very often require in the backbone rather complicated and sophisticated software solutions which enable the approach of a totally integrated automation (TIA). In view of this, the software engineers very often use production modeler to define the plant model and its standard operating procedures and create the respective new software by means of a high level graphical language which identifies the workflow of activities within the software. Subsequently, this string/term of high level graphical language is translated into a client based software language executable on the machine language level. This translation requires tremendous efforts in programming and needs serious testing to check whether the translated program behaves the same as the original string/term of the high level graphical language.

I.e. within the SIMATIC IT production suite software, a SIMATIC IT Production Modeler offers a modeling environment in which the various functions provided by SIMATIC IT Components (production resources, such as material, machine, personnel, tools, software components) are graphically combined to define the execution logics representing the operating procedures. These logics are called Production Operations and are presented as Product Production Rules PPR (workflows), in which each step represents the execution of a function provided by a component. To achieve this, SIMATIC IT Production Modeler also offers the modeling environment to build the Plant Model, essential for defining the plant's various behaviors.

For modeling in a technical way the production system it is required to divide the productive process defined by the production production rule in many steps (hereinafter called Product Segments PS) so that each of the product segments represents a simple action or feature that can be controlled by the MES system. This subdivision must take care of all dependencies existing between the product segments in order to guarantee that the entire production will be executed in the correct way. The product segments are usually managed in a central MES database by means of product production rules (PPR) in which the product segments are registered.

An example can be easily represented in terms of the manufacturing of a car considering all the variants and the optionals usually offered by the automotive industry. Starting from the basic model of the car, you have to consider all the possible combinations in terms for example of product segments for engines (e.g.1600, 1800, 2000, 2500), for transmission (e.g. 4-gear, 4-gear automatic, 5-gear, 5-gear automatic) and for wheels (e.g. steel wheels, light alloy wheels - standard, light alloy wheels - wide tires). So if you want to define a product production rule (PPR) for all the possible combinations a plurality of 48 PPRs can be already defined (in the example 48 PPRs; one for every possible combination). So it is obvious that even a person skilled in the art of managing product segments for a bigger amount of PPRs or PSs makes use of automatic filters to actualize product request, the processing time of this action can be very long and in worst case he will have to update manually the database or define new changes of structure in the database for keeping it as simple and transparent as possible.

In the discrete production of a product, the production request represents a request for the production of a single product satisfying a customer request, for example a car having a determined engine, a determined transmission and determined wheels. The production request in the MES environment is therefore the result of an integration of several external and mixed data sources but more often the production request are identified by a specific product production rule PPR.

The PPR can therefore be considered a mould for the production request. The PPR, as defined in the ISA-S95 standard, contain the entirety of the definition of all the resources that are needed during the production of the final product as required by the customer request. Via the PPR, a production request can be generated because the PPR are the mould in the sense that the PPR are the definition of how (in terms of production phases or steps) a final product should be made and what resources are required for this activity.

Unfortunately, the creation of a production request may consume several minutes and require a tremendous amount of database access activities. In fact, a product production rule may be composed, according to the provisions in the ISA-S95, by thousands of product segments each one of them defining the resources required by this specific production step. This huge amount of data includes all the possible patterns of theorectically available resources that could be determined distinctly not earlier than during the actual execution of the production request. Indeed, a PPR being the basis for the creation of a production request includes among its resources all possible equipment to be used without taking care of the status of the resource (e.g. busy, in maintenance, idle etc.). Of course, during the definition of the PPR the production modeling shall consider every possible constellation that could happen during the execution of the production request.

At present, the usual approach in order to manage the production of the product is to use a PPR as the mould for each production request. When a customer request arrives from the ERP system (Level 4), a new production request is instantiated starting with the associated PPR. All resources of the PPR (considering every possible combination of resources that could be executed at runtime) satisfying the custormer request are copied (cloned) and a new structure representing the production request is obtained. This kind of operation can take a rather long period due to the fact that the PPR comprises all possible resources (material, equipment, production steps, step dependencies, personnel requirements, process parameter and so on) needed during the execution of the production request being based on the customer request. It should be pointed out at that stage that quiet ofter a larger part of the resources copied into the production request at the end of the production according to the customer request will not have been used in this production.

When considering an example for a PPR that produces an aircraft engine the problem according to the prior art will become easily apparent: This PPR usually has a thousand of production steps. Considering that one of these production steps is the assembly of a number of parts of the aircraft engine, this assembly can be executed on different plant lines using specific mounting equipment present at that respective plant line. Usually, a factory has different plant lines but not earlier that at execution, the operator will know which plant line will be used and which equipment will be required. Therefore, the PPR has to consider all possible plant lines as candidates for the execution of the specific production step of the assembly.

The creation of new production request starting from this PPR without any strategy will result in poor results in the terms of the time required for the creation of the production request and the memory used by the MES system because only one plant line among all the configured ones in the PPR will be eventually used for the execution of the respective production step. In addition, the information on the eventually used plant line is usually not known at the time of the creation of the production request because the final plant line for the assembly usually depends on a plurality of other plant information (status) data which is not known a priori.

Therefore, it is one aim of the present invention to provide a method for the production of a product wherein said production is controlled by a Manufacturing Execution System compliant with the ISA-S95 standard that may improve the creation of the production request from the respective PPR less time and memory consuming.

This aim is achieved according to the invention by a method for the production of a product, said production being controlled and executed by a Manufacturing Execution System working according to the ISA-S95 standard, comprising the steps of:
a) providing a product production rule for the production of the product wherein said product production rule comprises a plurality of product segments thereby defining all the resources, such as materials, equipment, personnel, required during a workflow of production steps of said production;
b) receiving a customer request for the production of the product and creating a production request for the execution of the production according to said customer request wherein for the creation of the production request the production request is instantiated by copying a workflow of abstracted resources representing the workflow of production steps satisfying the customer request from the relevant product production rule into the production request;
c) executing the production by applying the production request and asynchronously to the creation of the production request adding the resource which replaces the abstracted resource related to the first production step from the production production rule to the production request thereby only copying the actually used resouce into the production request and executing the respective production step on that resource;
d) executing the production of the product by repeating step c) stepwise until all abstracted resources have been replaced in the workflow of abstracted resources related to the workflow of production steps by the actually used resource in that production step.

The present invention therefore speeds up the creation of the production request when starting from a PPR using a late binding approach. The late binding approach is realized by creating the production request with the workflow of abstracted resources that allows to create a production request with a minimum of information on the production resources eventually used. When the customer request arrives, the production request is not completely created by copying all possible resources from the PPR into the production request but only very few information in terms of the abstracted resources. In this concept of the workflow of abstracted resources, the approach could also be to just create the production request without copying any of the resources required for the execution of the production request. Anyway, it is also respectfull of the basic idea of having a late binding approach in order to improve MES system management. In this latter approach, during the creation of the production request, the physical resources are not copied at all and only in a second step i.e. before the execution the resources are copied from the respective PPR into the production request. In this last case, the copy of the resource may be made by respective filtering the requirements defined in the production request or in the background where all the resources are copied without any filter) or step by step according to the real execution (just the resources needed are copied. This latter case may delay the execution a bit because the resources are copied step by step). It is essential to the present invention that the information copied during the creation of the production request is just the minimal set in order to maintain the required conformity with the ISA-S95 standard in order enable the MES system to manage the production request. In this way, the creation of the production request is fast and the consumption of memory and access operations to the database are reduced to a minimum.

Preferably, the production production rule and the production request are ISA-S95 entities thereby enabling the full control and comprehensibility of both the PPR and production request by the MES system.

In a further preferred embodiment of the present invention, an abstracted resource represents a generic term for a number or a group of resources, such as a group of parallel production lines. Therefore, the abstracted resource represents the production step that is planned to be executed according to the PPR for this particular part of the workflow of production steps.

Preferably, an abstracted resource is considered a placeholder in the instantiated production request for the resource actually used in the production. This feature supports the late binding approach during the creation of the production request since the abstracted resource represents the resource eventually used without copying any physical resource from the PPR into the production request at the stage of the creation of the production request.

Other preferred embodiments of the present invention are listed in the remaining dependent claims.

Preferred examples of the present invention are described hereinafter in detail with reference to the attached drawings which depict in:
- Figure 1: a schematic overview on a car manufacturer facility comprising three plant line for the assembly of the cars;
- Figure 2: schematically a product production rule for the production of a car in the car manufacturer facility illustrated in Figure 1;
- Figure 3: schematically a production request for the production of an individualized car according to a customer request; said production request being created according to the prior art;
- Figure 4: schematically a production request for the production of the individualized car according to the customer request of Figure 3, said production request being created by use of abstracted resources; and
- Figure 5: schematically the production request for the production of the individualized car according to the customer request after completion of the production.

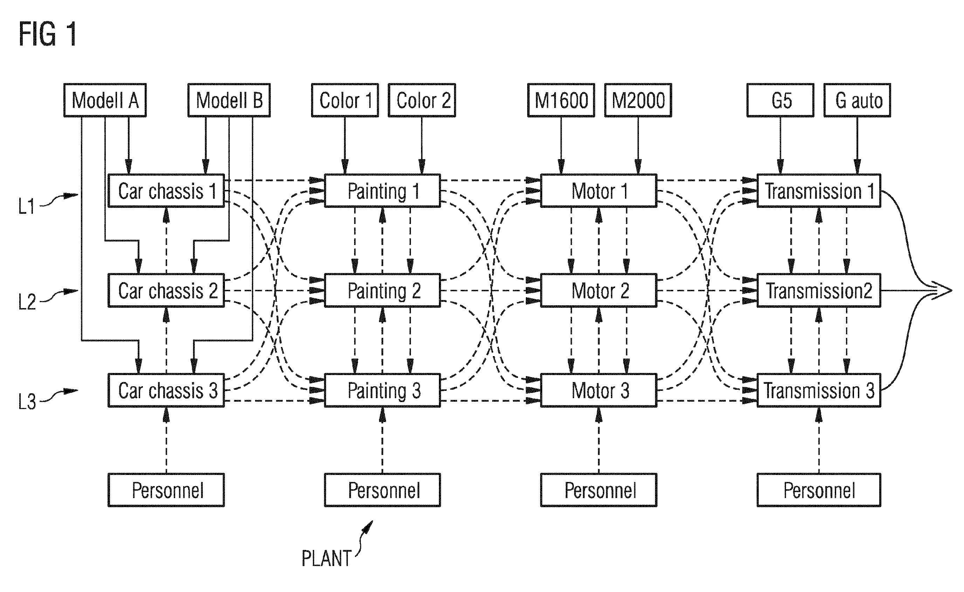

Figure 1 illustrates schematically and in a very simplified form a car manufacturing facility - hereinafter referred to as plant - which comprises three plant lines L1 to L3. Each plant line L1 to L3 comprises a station for the assembling of the car chassis - hereinafter referred to as Car chassis 1 to 3 - and a station for the car painting - hereinafter referred to as Painting 1 to 3 - and a station for the mounting of the car's engine - hereinafter referred to as Motor 1 to 3 - and a station for the mounting of the transmission gear - hereinafter referred to as Transmission 1 to 3. In the Car chassis 1 to 3 two different types of car chassis can be assembled - hereinafter referred to as Modell A and Modell B. In the Painting 1 to 3 the assembled Modell A or B can be painted in two different colors, Color 1 or Color 2. In the Motor 1 to 3 two different types of motors, M1600 and M2000, can be mounted to the assembled and painted Modell A or B. Finally, in the Transmission 1 to 3, the chosen transmission gear is mounted to the assembled, painted and motorized Modell A or B. For each of these four production steps, also personnel can be assigned according to the required demand.

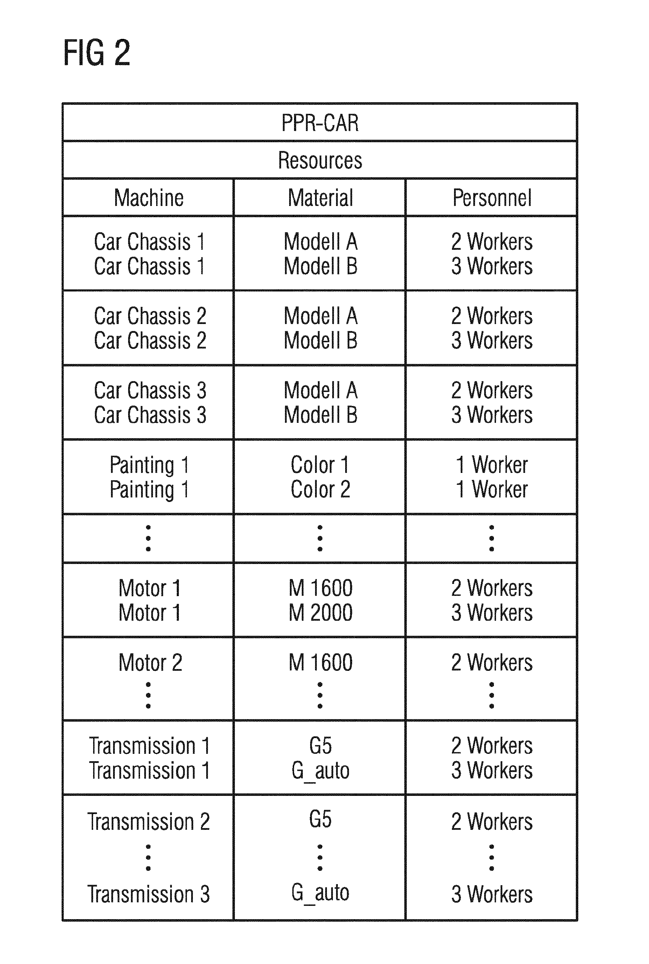

Figure 2 illustrates schematically a product production rule PPR for the production of a car in the car manufacturer facility PLANT as illustrated in Figure 1. The product production rule PPR comprises all the resources in terms of machines, materials and personnel which are required for the production of a car in that particular plant. Considering now the three plant lines L1 to L3 with each four stations each having two options, the amout of possible production configurations for the final production equals to 6⁴=1296 already in this very simplified set-up of the plant and the car options. Nevertheless, the PPR in conformity with the ISA-S95 must comprise all possible resources and all possible configurations of the resources. Each triple of machine, material and personnel can be considered a product segment for the execution of the production. As from this very simplified example, it is not at all astonishing that a real product production rule may comprise thousands of product segments in order to plan and execute the production of a good, such as a car.

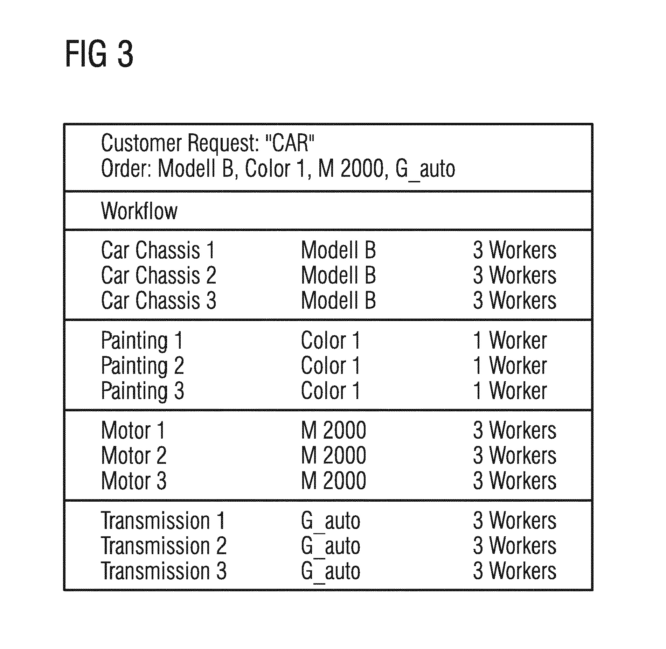

Figure 3 schematically illustrates a production request for the production of an individualized car according to a customer request; said production request being created in the example of Figure 3 according to the prior art, that means in accordance with the ISA-S95 standard, too. The customer request (client order) is initially registered and administrated in the plant's ERP system. Once the customer request is transferred into the MES system, the respective production request is created which forms the basis for the final execution of the production of an individualized (customized) car as ordered by the client. In the present example, the client orders a car Modell B in Color 1 with engine M2000 and an automatic gear G_auto. During the creation of the production request, only the resources that are possible options for the fulfillment of the required workflow of productions steps are copied from the product production rule PPR into the customer request as this is shown in Figure 3. With other words, regardless of the actually used resources for the production of this individual car, all resources that could be theoretically used during the production are copied in terms of the respective product segments into the production request in order to achieve the required status of the production request in terms of an ISA-S95 entity. Depending on the complexity of the production of the product and the plant, this creation period may take several minutes and requires beside a large number of database access operations also a quiet large amount of memory space.

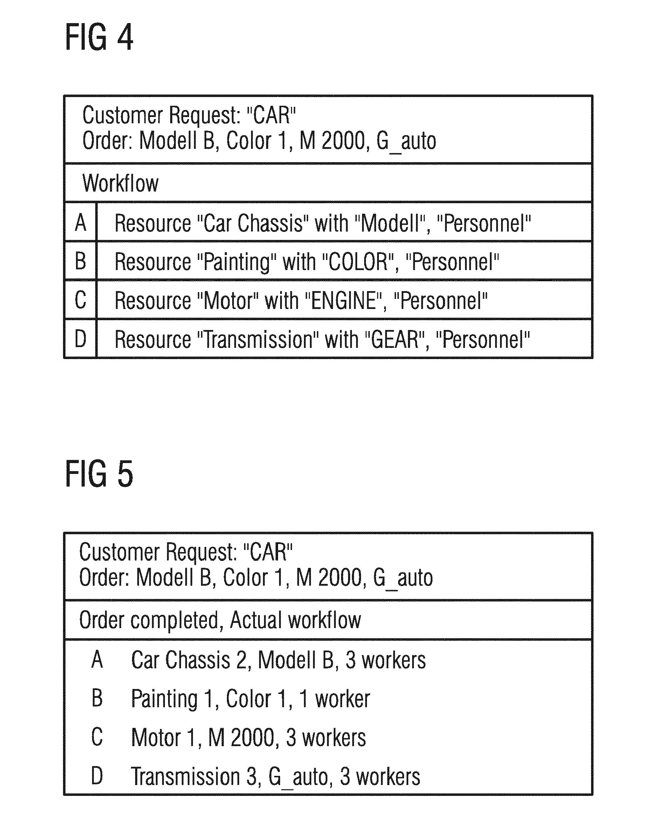

Figure 4 now illustrates the same creation process for the production request after the same customer request (client order) is handed over from the plant's ERP system to the MES system. The production request for the execution of the production according to said customer request is instantiated as ISA-S95 entity by just copying a workflow of abstracted resources representing the workflow of production steps satisfying the customer request from the relevant product production rule PPR into the production request. In the present example, only four line of code are copied into the production request at this early stage. The production process just determines at this early stage that a resource for assembling the car chassis of a yet not determined specific modell with a yet not determined amount of personnel is required in the first production step A. Once this production step A is completed successfully, a resource for painting the car with yet not determined color with a yet not determined amount of personnel is required in the second production step B. Again, one this production step B is completed successfully, a resource for the mounting of the car's engine with a yet not determined type of engine and a yet not determined amount of personnel is required in the third production step C. And last but not least, after the successful completion of the production step C, a resource for mounting a yet not determined transmission gear with a yet not determined amount of personnel is required in order to finish the production of the car according to the production request. Due to the applied approach of late binding, the productions request initially just comprises the workflow of abstracted resources that will be used in the production.

Therefore, the software for the creation of the production is slightly changed in a way that the code is enabled to identify the abstracted resources by reading the original product production rule PPR and identifying those groups of product segments that belong to the same generic class of production step in order to summarize this product segment under the rooth of the abstracted (generic) resource.

When the final production starts, the MES system reads the production request and decides in situ which physically present resource is chosen for the fulfillment of the distinct production step determined in the production request by the abstracted resource. Only at that stage during the execution of the production request and usually a long time after its creation, the respective resources actually used are copied from the product production rule PPR into the production request and replace the abstracted resource for the execution of the respective production step.

While executing the production of the product this procedure is stepwise repeated until all abstracted resources have been replaced in the workflow of abstracted resources related to the workflow of production steps by the actually used resources in that production step. With other word, in the present example of the production request, every time one of the production steps A to D is scheduled for its execution, the actually used resources are copied from the product production rule into the product request.

Once the production is completed, the production request may have the form as schematically illustrated in Figure 5. The assembly of the car chassis for Modell B has been executed with three workers on Car Chassis 2 in plant line L2. The painting of Color 1 has been executed with one worker in Painting 1 of plant line L1 because Painting 1 has been exclusively assigned to paint Color 1. The same applied for the engine where Motor 1 has been used with three workers to mount the engine M2000. Finally, Transmission 3 of the plant line L3 has been used with three workers for mounting the transmission gear G_auto because Transmission 1 has been on maintenance and Transmission 2 was actually assign to mount transmission gear G5.

Therefore, the present example illustrates that the creation of the production request has been speed up significantly when starting from a PPR using a late binding approach. The late binding approach is realized by creating the production request with the workflow of abstracted resources that allows to create a production request with a minimum of information on the production resources eventually used, but still in compliance with the ISA-S95 standard. When the customer request arrives, the production request is not completely created by copying all possible resources from the PPR into the production request but only very few information in terms of the abstracted resources. This information copied during the creation of the production request is just the minimal set in order to maintain the required conformity with the ISA-S95 standard in order enable the MES system to manage the production request. In this way, the creation of the production request is fast and the consumption of memory and access operations to the database are reduced to a minimum.

## Claims

1. Method for the production of a product (CAR), said production being controlled and executed by a Manufacturing Execution System working according to the ISA-S95 standard, comprising the steps of:
a) providing a product production rule (PPR) for the production of the product (CAR) wherein said product production rule (PPR) comprises a plurality of product segments thereby defining all the resources, such as materials, equipment, personnel, required during a workflow of production steps of said production;
b) receiving a customer request for the production of the product (CAR) and creating a production request for the execution of the production according to said customer request wherein for the creation of the production request the production request is instantiated by copying a workflow of abstracted resources representing the workflow of production steps (A to D) satisfying the customer request from the relevant product production rule (PPR) into the production request;
c) executing the production by applying the production request and asynchronously to the creation of the production request adding the resource which replaces the abstracted resource related to the first production step (A) from the production production rule (PPR) to the production request thereby only copying the actually used resouce into the production request and executing the respective production step on that resource;
d) executing the production of the product (CAR) by repeating step c) stepwise until all abstracted resources have been replaced in the workflow of abstracted resources related to the workflow of production steps (A to D) by the actually used resource in that production step.

2. The method according to claim 1, wherein the production production rule (PPR) and the production request are ISA-S95 entities.

3. The method according to claim 1 or 2, wherein an abstracted resource represents a generic term for a number or a group of resources, such as a group of parallel production lines (L1 to L3).

4. The method according to any of the preceding claims 1 to 3 wherein an abstracted resource is considered a placeholder in the instatiated production request for the resource actually used in the production.
